(19) Europäisches Patentamt
European Patent Office
Office européen des brevets

(11) **EP 3 438 773 B1**

(12) **EUROPÄISCHE PATENTSCHRIFT**

(45) Veröffentlichungstag und Bekanntmachung des Hinweises auf die Patenterteilung:
**30.09.2020   Patentblatt 2020/40**

(51) Int Cl.:
***G05B 19/404*** *(2006.01)*

(21) Anmeldenummer: **17184939.1**

(22) Anmeldetag: **04.08.2017**

(54) **BEARBEITUNG VON WERKSTÜCKEN MIT MODELLGESTÜTZTER FEHLERKOMPENSATION**

PROCESSING OF WORKPIECES WITH MODEL-SUPPORTED ERROR COMPENSATION

USINAGE DE PIÈCES À COMPENSATION D'ERREUR BASÉES SUR MODÈLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.02.2019   Patentblatt 2019/06**

(73) Patentinhaber: **Siemens Aktiengesellschaft 80333 München (DE)**

(72) Erfinder:
• **Reiser, Jürgen**
  **40670 Meerbusch (DE)**
• **Rost, Philipp**
  **90425 Nürnberg (DE)**
• **Schäfers, Elmar**
  **90763 Fürth (DE)**

(56) Entgegenhaltungen:
**EP-A1- 2 988 181       DE-A1-102005 048 390**
**DE-T5-112013 006 820**

## Beschreibung

Die vorliegende Erfindung geht aus von einem Bearbeitungsverfahren für ein Werkstück durch ein Werkzeug einer Werkzeugmaschine,

- wobei eine Steuereinrichtung der Werkzeugmaschine einen Lageregler implementiert,
- wobei der Lageregler sequenziell nacheinander jeweils einen Lagesollwert einer Folge von Lagesollwerten, einen ausgangsseitig der lagegeregelten Achse mittels einer Messeinrichtung erfassten Lageistwert und einen Kompensationswert entgegennimmt,
- wobei der Lageregler durch Addieren des jeweiligen Lagesollwertes und des jeweiligen Kompensationswertes sowie Subtrahieren des jeweiligen Lageistwertes einen resultierenden Wert ermittelt, anhand des resultierenden Wertes jeweils ein Stellsignal für die lagegeregelte Achse ermittelt und das jeweilige Stellsignal an die lagegeregelte Achse ausgibt,
- wobei die lagegeregelte Achse durch das Stellsignal entsprechend dem Lagesollwert eingestellt wird und dadurch die Position und/oder die Orientierung des Werkzeugs relativ zum Werkstück variiert wird und
- wobei zum Ermitteln des jeweiligen Kompensationswertes aus einer Speichereinrichtung, in der eine Folge von aufeinanderfolgenden Regelfehlern hinterlegt ist, sequenziell nacheinander entsprechend der Folge jeweils einer der Regelfehler ausgelesen wird.

Die vorliegende Erfindung geht weiterhin aus von einem Steuerprogramm für eine Steuereinrichtung einer Werkzeugmaschine, wobei das Steuerprogramm Maschinencode umfasst, der von der Steuereinrichtung abarbeitbar ist, wobei die Abarbeitung des Maschinencodes durch die Steuereinrichtung bewirkt, dass die Steuereinrichtung die Werkzeugmaschine gemäß einem derartigen Bearbeitungsverfahren betreibt.

Die vorliegende Erfindung geht weiterhin aus von einer Steuereinrichtung für eine Werkzeugmaschine, die mit einem derartigen Steuerprogramm programmiert ist, so dass sie im Betrieb die Werkzeugmaschine gemäß einem derartigen Bearbeitungsverfahren betreibt.

Die vorliegende Erfindung geht weiterhin aus von einer Werkzeugmaschine zum Bearbeiten eines Werkstücks durch ein Werkzeug der Werkzeugmaschine,

- wobei die Werkzeugmaschine eine Mehrzahl von lagegeregelten Achsen aufweist, mittels derer das Werkzeug entlang einer Bahn relativ zu dem Werkstück verfahrbar ist,
- wobei die Werkzeugmaschine eine derartige Steuereinrichtung aufweist, über welche die Achsen der Werkzeugmaschine lagegeregelt werden.

Ein derartiges Bearbeitungsverfahren ist beispielsweise aus der EP 2 988 181 A1 bekannt. Bei diesem Bearbeitungsverfahren wird der Regelfehler so, wie er aus der Speichereinrichtung ausgelesen wird, direkt und unmittelbar als Kompensationswert verwertet.

Aus der DE 10 2005 048 390 A1 ist ein Bearbeitungsverfahren für ein Werkstück durch ein Werkzeug einer Werkzeugmaschine bekannt,

- wobei eine Steuereinrichtung der Werkzeugmaschine einen Lageregler und ein Modell der lagegeregelten Achse implementiert,
- wobei der Lageregler sequenziell nacheinander jeweils einen Lagesollwert und einen ausgangsseitig der lagegeregelten Achse mittels einer Messeinrichtung erfassten Lageistwert entgegennimmt,
- wobei der Lageregler durch Subtrahieren des jeweiligen Lageistwertes vom jeweiligen Lagesollwert einen resultierenden Wert ermittelt, anhand des resultierenden Wertes jeweils ein Stellsignal für eine lagegeregelte Achse ermittelt und das jeweilige Stellsignal an die lagegeregelte Achse ausgibt,
- wobei die lagegeregelte Achse durch das Stellsignal entsprechend dem Lagesollwert eingestellt wird und dadurch die Position und/oder die Orientierung des Werkzeugs relativ zum Werkstück variiert wird.

Bei der DE 10 2005 048 390 A1 wird mittels des Modells das mechanisch-dynamische Verhalten der lagegeregelten Achse nachgebildet. Dem Modell wird der jeweilige Lagesollwert zugeführt. Das Modell ermittelt daraus einen modifizierten Lagesollwert und führt ihn dem Lageregler zu.

Bei der Bearbeitung von Werkstücken durch Werkzeugmaschinen treten oftmals Abweichungen zwischen der eigentlich gewünschten Kontur und der tatsächlich gefertigten Kontur auf. Die Regelfehler sind absolut gesehen zwar oftmals relativ gering (deutlich unter 1 mm, oftmals sogar nur wenige μm). Je nach geforderter Fertigungstoleranz können die Abweichungen aber dennoch störend sein.

Wenn die auftretenden Regelfehler sich periodisch wiederholen, so kann das Regelverhalten mit lernenden Verfahren deutlich verbessert werden. Eine typische Vorgehensweise hierfür ist in der genannten EP 2 988 181 A1 erläutert. Das typische Inversionsproblem, das für die Fehlerkompensation benötigt wird, wird hierbei dadurch gelöst, dass beim Ermitteln der effektiven Regelfehler die zunächst erfassten Regelfehler in einem Filter gefiltert werden, beispielsweise tiefpassgefiltert.

Die Vorgehensweise der EP 2 988 181 A1 führt bereits zu einer deutlichen Verbesserung. Das Schwingungsverhalten der lagegeregelten Achse kann jedoch nicht berücksichtigt werden. Insbesondere können nur Fehler kompensiert werden, deren durch deren Periode definierte Frequenz unterhalb der ersten Resonanzfrequenz der lagegeregelten Achse liegt. Die mögliche Bandbreite der Fehlerkorrektur ist daher begrenzt.

Bei der EP 2 988 181 A1 wird - verkürzt gesprochen - versucht, auftretende Fehler zu erfassen und zu kompensieren. Im Gegensatz hierzu wird bei der DE 10 2005 048 390 A1 versucht, Fehler gar nicht erst entstehen zu lassen. Bei der DE 10 2005 048 390 A1 wird die lagegeregelte Achse als schwingungsfähiges System modelliert und hierauf aufbauend der Lagesollwert derart ermittelt, dass Schwingungen vermieden werden. Auch bei der DE 10 2005 048 390 A1 treten jedoch weiterhin Regelfehler auf.

Die Aufgabe der vorliegenden Erfindung besteht darin, Möglichkeiten zu schaffen, mittels derer auf zuverlässige und einfache Weise eine optimierte Bearbeitung von Werkstücken erreicht werden kann.

Die Aufgabe wird durch ein Bearbeitungsverfahren mit den Merkmalen des Anspruchs 1 gelöst. Vorteilhafte Ausgestaltungen des Bearbeitungsverfahren sind Gegenstand der abhängigen Ansprüche 2 bis 11.

Erfindungsgemäß wird ein Bearbeitungsverfahren der eingangs genannten Art dadurch ausgestaltet,

- dass eine Steuereinrichtung zusätzlich ein Modell der lagegeregelten Achse implementiert und
- dass der jeweils ausgelesene Regelfehler dem Modell der lagegeregelten Achse zugeführt wird, welches unter Nachbildung des mechanisch-dynamischen Verhaltens der lagegeregelten Achse anhand des jeweils ausgelesenen Regelfehlers den jeweiligen Kompensationswert ermittelt und den ermittelten Kompensationswert dem Lageregler zuführt.

Im Rahmen der vorliegenden Erfindung werden also die Regelfehler dem Modell zugeführt und dadurch entsprechend modifizierte Werte ermittelt, nämlich die Kompensationswerte. Die vorliegende Erfindung basiert also auf der sogenannten modellbasierten Vorsteuerung. Diese - bei der Anwendung auf die Lagesollwerte selbst solche bekannte - Vorgehensweise ermöglicht es, das dynamische Verhalten einer lagegeregelten Achse bei der Vorsteuerung zu berücksichtigen.

Es ist möglich, dass der erfasste Lageistwert mit einer eine Periodendauer aufweisenden Störung beaufschlagt ist. In diesem Fall kann das erfindungsgemäße Bearbeitungsverfahren dadurch ausgestaltet werden,

- dass einem vorderen Knotenpunkt des Lagereglers der jeweilige Lagesollwert und der jeweilige Lageistwert zugeführt werden und der vordere Knotenpunkt durch Differenzbildung von Lagesollwert und Lageistwert eine jeweilige Regeldifferenz ermittelt,
- dass einem hinteren Knotenpunkt des Lagereglers die jeweilige Regeldifferenz und der jeweilige Kompensationswert zugeführt werden und der hintere Knotenpunkt durch Addition von Regeldifferenz und Kompensationswert den jeweiligen resultierenden Wert ermittelt,
- dass zwischen dem vorderen und dem hinteren Knotenpunkt die Regeldifferenz abgegriffen und einem Kompensationskreis zugeführt wird, der einen inneren Knotenpunkt, ein Frequenzfilter sowie einen vorderen und einen hinteren Pufferspeicher aufweist,
- dass dem inneren Knotenpunkt mit einem ersten Wichtungsfaktor gewichtet die Regeldifferenz und mit einem zweiten Wichtungsfaktor gewichtet ein Rückkopplungssignal zugeführt werden,
- dass der innere Knotenpunkt ein durch Addieren von gewichteter Regeldifferenz und gewichtetem Rückkopplungssignal gebildetes inneres Summensignal dem Frequenzfilter zuführt,
- dass das Frequenzfilter eine Frequenzfilterung durchführt und das gefilterte Signal dem vorderen Pufferspeicher zuführt,
- dass der vordere Pufferspeicher eine erste Laufzeitverzögerung durchführt und das entsprechend verzögerte Signal dem hinteren Pufferspeicher zuführt,
- dass der hintere Pufferspeicher eine zweite Laufzeitverzögerung durchführt und das entsprechend verzögerte Signal als Rückkopplungssignal ausgibt,
- dass der Frequenzfilter, der vordere Pufferspeicher und der hintere Pufferspeicher zusammen die Speichereinrichtung bilden,
- dass zwischen dem vorderen Pufferspeicher und dem hinteren Pufferspeicher der jeweilige Regelfehler ausgelesen und dem Modell zugeführt wird und
- dass das Frequenzfilter und die beiden Pufferspeicher derart ausgelegt sind, dass die Summe der Verzögerungszeiten von Frequenzfilter und beiden Pufferspeichern ein ganzzahliges Vielfaches der Periodendauer der Störung ist und die Summe der Verzögerungszeiten von Frequenzfilter und vorderem Pufferspeicher ein ganzzahliges Vielfaches der Periodendauer der Störung abzüglich der Laufzeit ist, die vergeht, bis ein dem vorderen Knotenpunkt zugeführtes Signal eine Änderung des Lageistwertes bewirkt.

Durch diese Vorgehensweise kann im Falle einer periodischen Störung auf besonders einfache und zuverlässige Weise der Regelfehler erfasst und ermittelt werden.

Es ist möglich, dass das Frequenzfilter eine lineare nichtrekursive digitale Filterung durchführt, insbesondere eine Tiefpassfilterung. Alternativ ist es möglich, dass das Frequenzfilter eine Anzahl von orthogonalen Korrelationsfilterungen durchführt, mittels derer jeweils eine einzelne Frequenzkomponente ausgefiltert wird.

Falls die Periodendauer der Störung variiert, ist es möglich, dass die Verzögerungszeit des vorderen Pufferspeichers entsprechend der Periodendauer dynamisch nachgeführt wird. Ein derartiger Fall kann insbesondere bei einer Rundachse auftreten, wenn deren Drehzahl geändert wird.

In manchen Fällen ist bei der Bearbeitung von Werkstücken durch das Werkzeug der Regelfehler zwar nicht periodisch, wohl aber reproduzierbar. Er tritt also bei jedem gefertigten Werkstück in gleicher oder zumindest ähnlicher Weise auf. Um auch in einem derartigen Fall eine Fehlerkompensation vornehmen zu können, ist in einer Ausgestaltung der vorliegenden Erfindung vorgesehen,

- dass der Steuereinrichtung eine Folge von Sollwertvektoren vorgegeben wird,
- dass die Sollwertvektoren für die lagegeregelte Achse und eine Mehrzahl von weiteren lagegeregelten Achsen der Werkzeugmaschine jeweils einen Lagesollwert umfassen,
- dass die Position und/oder die Orientierung des Werkzeugs relativ zum Werkstück auch durch die weiteren lagegeregelten Achsen variiert wird,
- dass die Regelfehler in der Speichereinrichtung zumindest für einen ersten Abschnitt der Folge von Sollwertvektoren unter Zuordnung zu den Sollwertvektoren des entsprechenden Abschnitts hinterlegt sind und
- dass die Steuereinrichtung den jeweils aus der Speichereinrichtung auszulesenden Regelfehler anhand desjenigen Sollwertvektors ermittelt, dessen Lagesollwert dem Lageregler zugeführt wird.

Die Sollwertvektoren können alternativ auf das Werkstückkoordinatensystem oder auf das Maschinenkoordinatensystem bezogen sein. Als Repräsentant für den jeweiligen Sollwertvektor bzw. als "Zeiger" auf den jeweiligen Sollwertvektor kann weiterhin beispielsweise auch ein Bahnparameter verwendet werden, also der absolute oder normierte zurückgelegte Weg bei der Bearbeitung des Werkstücks durch das Werkzeug.

Im einfachsten Fall bestimmen die Sollwertvektoren jeweils ausschließlich die Position des Werkzeugs relativ zum Werkstück. In vielen Fällen bestimmen die Sollwertvektoren jedoch jeweils die Position und die Orientierung des Werkzeugs relativ zum Werkstück.

In manchen Fällen tritt weiterhin an mehreren Stellen der Bearbeitung des Werkstücks durch das Werkzeug ein gleicher oder gleichartiger Regelfehler auf. In diesem Fall kann es möglich sein, dass der Regelfehler für den ersten Abschnitt der Folge von Sollwertvektoren in der Speichereinrichtung auch für mindestens einen zweiten Abschnitt der Folge von Sollwertvektoren unter Zuordnung auch zu den Sollwertvektoren des zweiten Abschnitts hinterlegt sind. In diesem Fall können ein und dieselben Regelfehler sowohl für den ersten Abschnitt der Folge von Sollwertvektoren als auch für den zweiten Abschnitt der Folge von Sollwertvektoren (und gegebenenfalls auch weitere Abschnitte der Folge von Sollwertvektor) verwendet werden.

Auch im Falle eines nichtperiodischen Regelfehlers ist es möglich, dass die Steuereinrichtung durch Vergleich des jeweiligen Lageistwerts mit dem jeweiligen Lagesollwert eine Regeldifferenz ermittelt und den in der Speichereinrichtung hinterlegten korrespondierenden Regelfehler anhand der Regeldifferenz modifiziert.

In der Regel führt der Lageregler das jeweilige Stellsignal einem dem Lageregler unterlagerten Regler zu. Der unterlagerte Regler kann beispielsweise ein Drehzahl- oder Geschwindigkeitsregler oder ein Moment-, Beschleunigungs- oder Stromregler sein. Auch beide Reglerarten - also ein Drehzahl- oder Geschwindigkeitsregler zusätzlich zu einem Moment-, Beschleunigungs- oder Stromregler - sind möglich. In diesem letztgenannten Fall ist der Moment-, Beschleunigungs- oder Stromregler seinerseits dem Drehzahl- oder Geschwindigkeitsregler unterlagert. Im Falle eines unterlagerten Reglers führt es zu einer höheren Dynamik und einer besseren Fehlerkorrektur, wenn mittels des Modells anhand des Regelfehlers zusätzlich zum Kompensationswert ein Vorsteuersignal ermittelt wird, das dem unterlagerten Regler zugeführt wird. Im Falle von zwei unterlagerten Reglern können in diesem Fall selbstverständlich auch zwei Vorsteuersignale ermittelt und den beiden unterlagerten Reglern zugeführt werden.

Das Modell kann nach Bedarf arbeiten. Insbesondere ist es möglich, dass das Modell einen Zustand der lagegeregelten Achse ermittelt und der Zustand auf das Modell rückgekoppelt wird. Alternativ oder zusätzlich ist es möglich, dass das Modell die lagegeregelte Achse mittels linearer Differenzialgleichungen modelliert. Das Modell kann insbesondere als lineares Modell ausgebildet sein.

Die Aufgabe wird weiterhin durch ein Steuerprogramm für eine Steuereinrichtung einer Werkzeugmaschine mit den Merkmalen des Anspruchs 12 gelöst. Erfindungsgemäß bewirkt die Abarbeitung des Maschinencodes durch die Steuereinrichtung, dass die Steuereinrichtung die Werkzeugmaschine gemäß einem erfindungsgemäßen Bearbeitungsverfahren betreibt.

Die Aufgabe wird weiterhin durch eine Steuereinrichtung für eine Werkzeugmaschine mit den Merkmalen des Anspruchs 13 gelöst. Erfindungsgemäß ist die Steuereinrichtung mit einem erfindungsgemäßen Steuerprogramm programmiert, so dass sie im Betrieb die Werkzeugmaschine gemäß einem erfindungsgemäßen Bearbeitungsverfahren betreibt.

Die Aufgabe wird weiterhin durch eine Werkzeugmaschine zum Bearbeiten eines Werkstücks durch ein Werkzeug mit den Merkmalen des Anspruchs 14 gelöst. Erfindungsgemäß ist bei einer Werkzeugmaschine der eingangs genannten Art die Steuereinrichtung erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1      eine Werkzeugmaschine nebst Steuereinrichtung und Werkstück,
FIG 2      eine mögliche Implementierung einer Steuereinrichtung,
FIG 3      eine alternative mögliche Implementierung der Steuereinrichtung,
FIG 4      ein Zeitdiagramm einer Störung,
FIG 5      beispielhaft eine mögliche Bearbeitung eines Werkstücks durch ein Werkzeug,
FIG 6      beispielhaft eine weitere mögliche Bearbeitung eines Werkstücks durch ein Werkzeug,
FIG 7      eine Modifikation von FIG 3,
FIG 8      eine mögliche Ausgestaltung eines Frequenzfilters,
FIG 9      eine Modifikation von FIG 2 und
FIG 10    eine mögliche Ausgestaltung eines Modells.

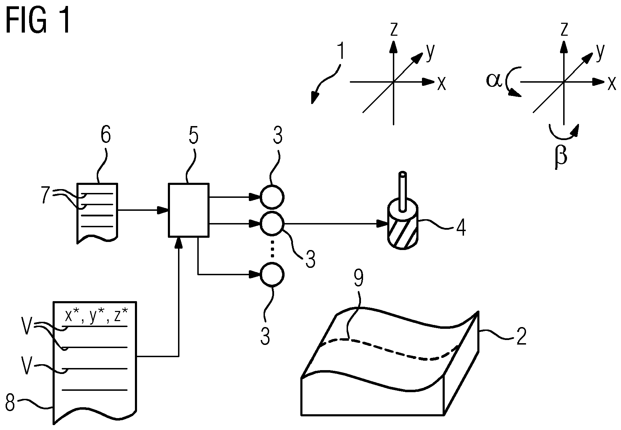

Gemäß FIG 1 dient eine Werkzeugmaschine 1 der Bearbeitung eines Werkstücks 2. Die Werkzeugmaschine 1 weist mehrere lagegeregelte Achsen 3 auf. Minimal sind drei lagegeregelte Achsen 3 vorhanden. In diesem Fall ist ein Werkzeug 4, mittels dessen das Werkstück 2 bearbeitet wird, relativ zum Werkstück 2 in der Regel ausschließlich translatorisch verfahrbar. Die Verfahrbarkeit ist in FIG 1 durch die Angabe der translatorischen Richtungen x, y, z eines üblichen kartesischen Koordinatensystems angedeutet. In vielen Fällen sind jedoch mehr als drei lagegeregelte Achsen 3 vorhanden, beispielsweise fünf lagegeregelte Achsen 3. In diesem Fall ist das Werkzeug 4 relativ zum Werkstück 2 in der Regel translatorisch verfahrbar und zusätzlich rotatorisch orientierbar. Dies ist in FIG 1 durch die alternative Angabe der translatorischen Richtungen x, y, z des kartesischen Koordinatensystems zuzüglich der Angabe zweier Winkel $\alpha$, $\beta$ angedeutet. Das Werkzeug 4 kann beispielsweise ein Bohrer oder ein Fräser sein. Das Werkzeug 4 kann jedoch auch anders ausgebildet sein, insbesondere auch für eine kontaktlose Bearbeitung des Werkstücks 2, beispielsweise als Laser.

Die Werkzeugmaschine 1 weist eine Steuereinrichtung 5 auf. Die Steuereinrichtung 5 ist in der Regel als numerische Steuerung ausgebildet. Sie ist weiterhin in der Regel softwareprogrammierbar. Ihre prinzipielle Wirkungsweise wird daher durch ein Steuerprogramm 6 bestimmt, mit dem die Steuereinrichtung 5 programmiert ist. Das Steuerprogramm 6 umfasst Maschinencode 7, der von der Steuereinrichtung 5 abarbeitbar ist. Die Abarbeitung des Maschinencodes 7 durch die Steuereinrichtung 5 bewirkt, dass die Steuereinrichtung 5 die Werkzeugmaschine 1 gemäß einem Bearbeitungsverfahren betreibt, wie es nachstehend näher erläutert wird.

Zum Durchführen einer bestimmten Bearbeitung wird der Steuereinrichtung 5 zusätzlich ein Teileprogramm 8 zugeführt bzw. wird allgemein gesprochen der Steuereinrichtung 5 das Teileprogramm 8 vorgegeben. Das Teileprogramm 8 kann eine Folge von Sollwertvektoren V enthalten, die von der Steuereinrichtung 5 sequenziell nacheinander abgearbeitet werden. Alternativ ist es möglich, dass die Steuereinrichtung 5 die Folge von Sollwertvektoren V anhand des Teileprogramms 8 eigenständig generiert. Auch Mischformen sind möglich. Das Steuerprogramm 6 ist also die Systemsteuerung der Steuereinrichtung 5, welche die Art und Weise festlegt, auf die das Teileprogramm 8 abgearbeitet wird.

Jeder Sollwertvektor V enthält für jede lagegeregelte Achse 3 jeweils einen Lagesollwert x*, y*, z* usw. Dies ist in FIG 1 nur für den ersten Sollwertvektor V dargestellt, gilt aber für alle Sollwertvektoren V. Jeder Sollwertvektor V legt aufgrund seiner Sollwerte x*, y*, z* usw. zumindest eine jeweilige Position des Werkzeugs 4 relativ zum Werkstück 2 fest, gegebenenfalls auch dessen Orientierung relativ zum Werkstück 2. Die Folge von Sollwertvektoren V legt dadurch eine Bahn 9 fest, entlang derer das Werkzeug 4 relativ zu dem Werkstück 2 verfahren werden soll. Die Bahn 9 umfasst gegebenenfalls auch die durch die Sollwertvektoren V festgelegte Orientierung des Werkzeugs 4 relativ zum Werkstück 2. Das entsprechende Verfahren erfolgt durch die Steuereinrichtung 5, welche die lagegeregelten Achsen 3 entsprechend ansteuert.

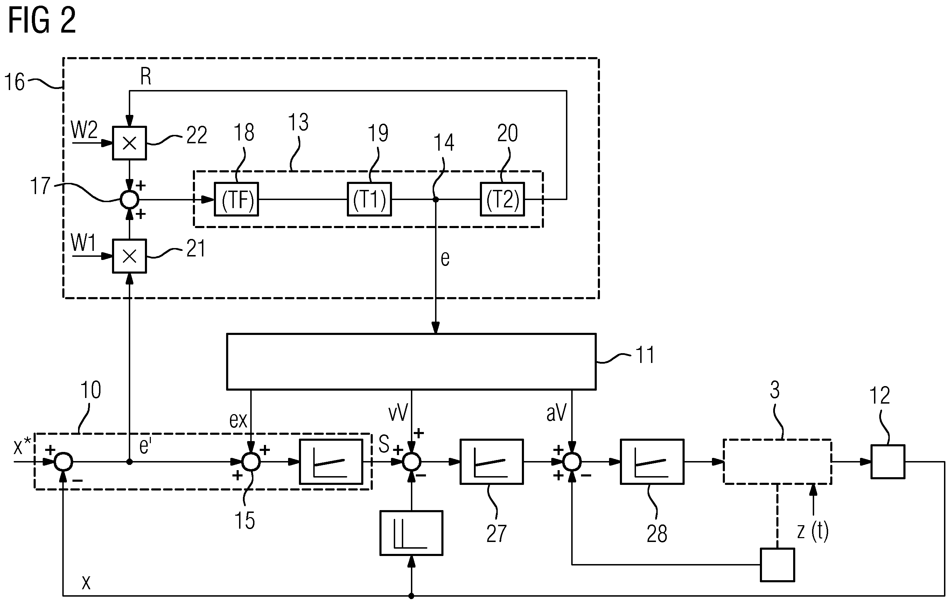

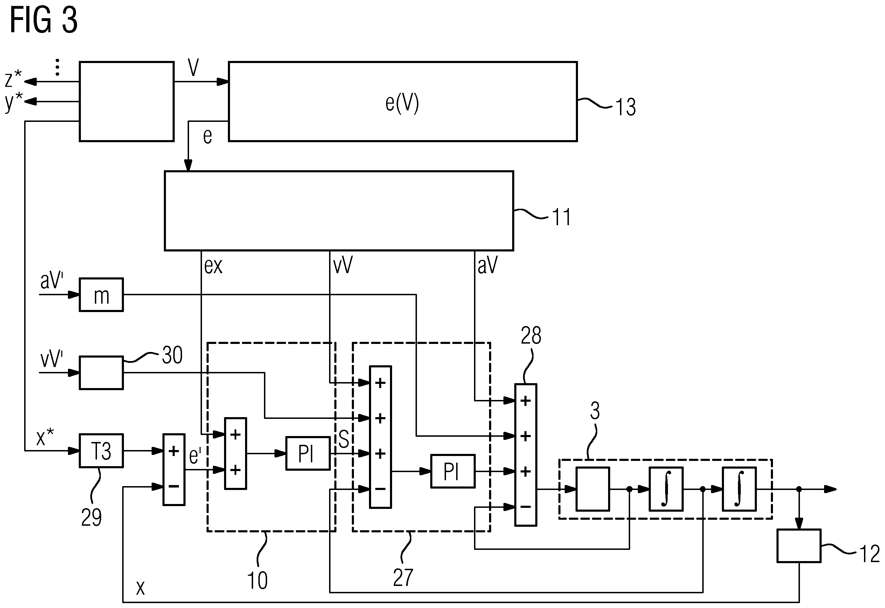

Nachfolgend wird in Verbindung mit den FIG 2 und 3 die Wirkungsweise der Steuereinrichtung 5 für eine einzelne lagegeregelte Achse 3 erläutert. Die entsprechenden Ausführungen können jedoch für jede lagegeregelte Achse 3 gültig sein. Weiterhin ist die Darstellung in den FIG 2 und 3 zeitkontinuierlich. Die praktische Realisierung ist meist zeitdiskret. Insbesondere erfolgt sie in der Regel im gleichen Takt, mit der die lagegeregelten Achsen 3 auch gesteuert werden. Weiterhin wird nachfolgend in Verbindung mit den FIG 2 und 3 zunächst das der vorliegenden Erfindung zugrunde liegende Prinzip erläutert. Sodann werden unter separatem Eingehen auf die FIG 2 und 3 weitere in der jeweiligen FIG dargestellte Ausgestaltungen der vorliegenden Erfindung erläutert.

Zum Ansteuern der lagegeregelten Achse 3 implementiert die Steuereinrichtung 5 gemäß den FIG 2 und 3 einen Lageregler 10 und ein Modell 11 der lagegeregelten Achse 3. Das Modell 11 bildet das mechanisch-dynamische Verhalten der lagegeregelten Achse 3 nach. Die Modellierung kann insbesondere nach Art eines Zweimassen-Schwingers erfolgen. Das Modell 11 wird später noch näher erläutert werden.

Der Lagereglers 10 nimmt sequenziell nacheinander jeweils einen Lagesollwert x* einer Folge von Lagesollwerten x*, einen Lageistwert x und einen Kompensationswert ex entgegen. Der Lageistwert x wird mittels einer Messeinrichtung 12 ausgangsseitig der lagegeregelten Achse 3 erfasst. Der Begriff "sequenziell nacheinander" ist hierbei nicht in dem Sinne zu verstehen, dass der Lageregler 10 sequenziell nacheinander den Lagesollwert x*, den Lageistwert x und den Kompensationswert ex entgegennimmt. Die drei Werte x*, x und ex werden dem Lageregler 10 gleichzeitig zugeführt. Der Begriff "sequenziell nacheinander" ist vielmehr auf die Folge von Lagesollwerten x* bezogen. Mit jedem Zeittakt werden dem Lageregler 10 also jeweils ein neuer Lagesollwert x*, ein neuer Lageistwert x und ein neuer Kompensationswert ex zugeführt.

Der Lageregler 10 bildet durch Addieren des jeweiligen Lagesollwertes x* und des jeweiligen Kompensationswertes ex sowie Subtrahieren des jeweiligen Lageistwertes x einen resultierenden Wert. Anhand des resultierenden Wertes ermittelt der Lageregler 10 - beispielsweise gemäß einer PI-Charakteristik - jeweils ein Stellsignal S für die lagegeregelte Achse 3. Das jeweilige Stellsignal S gibt der Lageregler 10 an die lagegeregelte Achse 3 aus. Durch das Stellsignal S wird somit die lagegeregelte Achse 3 entsprechend dem Lagesollwert x* eingestellt. Somit wird die Position (also der x-, der y- und/oder der z-Wert) und/oder die Orientierung (also mindestens einer der Winkel $\alpha$ und $\beta$) des Werkzeugs 4 relativ zum Werkstück 2 variiert.

Zum Ermitteln des jeweiligen Kompensationswertes ex wird aus einer Speichereinrichtung 13 ein Regelfehler e ausgelesen. Der Regelfehler e ist innerhalb der Speichereinrichtung 13 Bestandteil einer Folge von dort gespeicherten bzw. hinterlegten aufeinanderfolgenden Regelfehlern e. Der ausgelesene Regelfehler e wird dem Modell 11 der lagegeregelten Achse 3 zugeführt. Das Modell 11 ermittelt anhand des Regelfehlers e unter Nachbildung des mechanisch-dynamischen Verhaltens der lagegeregelten Achse 3 den zugehörigen Kompensationswert ex. Den so ermittelten Kompensationswert ex führt das Modell 11 dem Lageregler 10 zu.

Die Betriebsweise des Lagereglers 10 ist, wie bereits erwähnt, zyklisch getaktet. Der Arbeitstakt kann beispielsweise bei 1 ms oder darunter liegen, beispielsweise bei 125 $\mu$s. Dementsprechend wird dem Lageregler 10 mit dem Arbeitstakt jeweils ein neuer Lagesollwert x* zugeführt. Auch wird jeweils ein neuer Lageistwert x erfasst und dem Lageregler 10 zugeführt. Weiterhin wird aus der Speichereinrichtung 13 auch jeweils ein neuer Regelfehler e ausgelesen, daraus anhand des Modells 11 ein neuer Kompensationswert ex ermittelt und der neu ermittelte Kompensationswert ex dem Lageregler 10 zugeführt. Das Auslesen der Regelfehler e aus der Speichereinrichtung 13 erfolgt entsprechend der Folge von Regelfehlern e, wie sie in der Speichereinrichtung 13 hinterlegt sind.

Das Modell 11 kann in äquivalenter Form auch für die Modifizierung der Lagesollwerte x* selbst verwendet werden. In diesem Fall ist bereits der dem Lageregler 10 zugeführte jeweilige Lagesollwert aufgrund des entsprechenden Modells vorab modifiziert.

Die bisherigen Erläuterungen sind sowohl für die Ausgestaltung gemäß FIG 2 als auch für die Ausgestaltung gemäß FIG 3 gültig. Nunmehr wird unter Bezugnahme auf FIG 2 eine mögliche Anwendung des vorliegenden Prinzips näher erläutert.

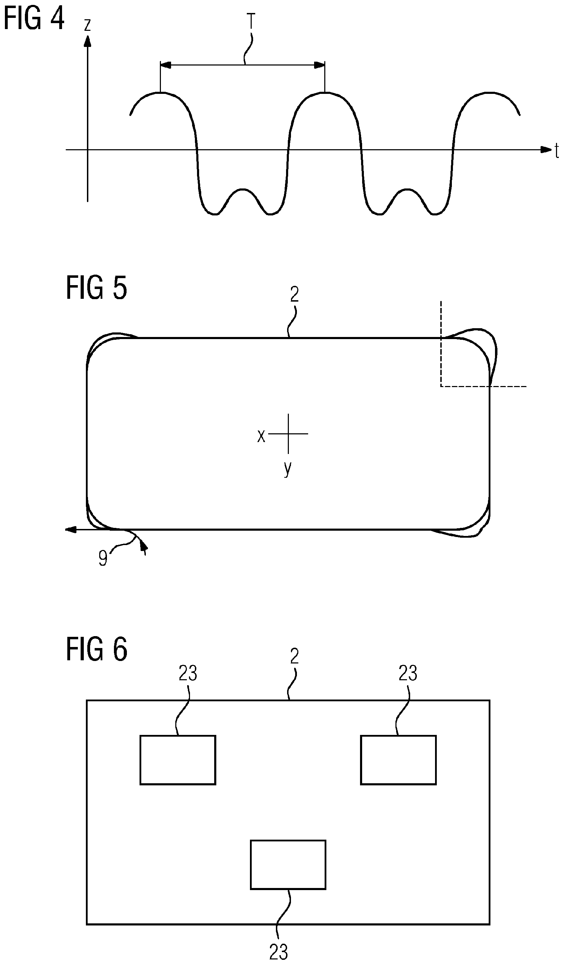

Die Ausgestaltung von FIG 2 ist insbesondere dann sinnvoll, wenn der erfasste Istwert x entsprechend der Darstellung in FIG 4 mit einer periodischen Störung z beaufschlagt ist. Die Störung z ist also eine periodische Funktion der Zeit t und weist demzufolge eine Periodendauer T auf.

Im Rahmen der Ausgestaltung von FIG 2 werden einem vorderen Knotenpunkt 14 des Lagereglers 10 der jeweilige Lagesollwert x* und der jeweilige Lageistwert x zugeführt. Der vordere Knotenpunkt 14 ermittelt durch Differenzbildung von Lagesollwert x* und Lageistwert x eine jeweilige Regeldifferenz e'. Einem hinteren Knotenpunkt 15 des Lagereglers 10 werden die jeweilige Regeldifferenz e' und der jeweilige Kompensationswert ex zugeführt. Der hintere Knotenpunkt 15 ermittelt durch Addition von Regeldifferenz e' und Kompensationswert ex den jeweiligen resultierenden Wert.

Die Regeldifferenz e' wird zwischen dem vorderen und dem hinteren Knotenpunkt 14, 15 abgegriffen und einem Kompensationskreis 16 zugeführt. Der Kompensationskreis 16 weist einen inneren Knotenpunkt 17, ein Frequenzfilter 18, einen vorderen Pufferspeicher 19 und einen hinteren Pufferspeicher 20 auf. Dem inneren Knotenpunkt 17 sind zwei Multiplizierer 21, 22 vorgeordnet. Dem Multiplizierer 21 wird die Regeldifferenz e' zugeführt, dem Multiplizierer 22 ein Rückkopplungssignal R. Die Multiplizierer 21, 22 multiplizieren die ihnen zugeführten Signale e', R mit einem jeweiligen Wichtungsfaktor W1, W2 und führen die Produkte dem inneren Knotenpunkt 17 zu. Der innere Knotenpunkt 17 addiert die mit dem Wichtungsfaktor W1 gewichtete Regeldifferenz e' und das mit dem Wichtungsfaktor W2 gewichtete Rückkopplungssignal R und bildet so ein inneres Summensignal. Das innere Summensignal führt der innere Knotenpunkt 17 dem Frequenzfilter 18 zu.

Das Frequenzfilter 18 führt eine Frequenzfilterung durch. Das Frequenzfilter 18 kann zu diesem Zweck beispielsweise als lineares nichtrekursives digitales Filter ausgebildet sein, insbesondere als Tiefpassfilter. Eine Filterordnung des Frequenzfilters 18 kann durch Einstellen entsprechender Parameter einstellbar sein. Das Frequenzfilter 18 führt das entsprechend gefilterte Signal dem vorderen Pufferspeicher 19 zu.

Der vordere Pufferspeicher 19 führt eine Laufzeitverzögerung des ihm zugeführten Signals um eine erste Verzögerungszeit T1 durch. Das entsprechend verzögerte Signal führt der vordere Pufferspeicher 19 dem hinteren Pufferspeicher 20 zu. In analoger Weise führt der hintere Pufferspeicher 20 eine Laufzeitverzögerung um eine zweite Verzögerungszeit T2 durch. Das entsprechend verzögerte Signal gibt der hintere Pufferspeicher 20 als Rückkopplungssignal R aus. Zwischen dem vorderen Pufferspeicher 19 und dem hinteren Pufferspeicher 20 wird der jeweilige Regelfehler e ausgelesen und dem Modell 11 zugeführt. Der Frequenzfilter 18, der vordere Pufferspeicher 19 und der hintere Pufferspeicher 20 bilden zusammen die Speichereinrichtung 13.

Das Frequenzfilter 18 weist, wie bereits erwähnt, eine Filterordnung auf. Die Filterordnung korrespondiert mit einer Verzögerungszeit TF. Erfindungsgemäß sind das Frequenzfilter 18 und die beiden Pufferspeicher 19, 20 derart ausgelegt, dass die Beziehung

$$TF + T1 + T2 = n \cdot T \tag{1}$$

gilt. n ist eine ganze Zahl. In der Regel ist die Zahl n so klein wie möglich. Oftmals weist die Zahl n den Wert 1 oder den Wert 2 auf.

Die lageregelte Achse 3 weist in Verbindung mit der normalen Regelung (d.h. ohne Kompensationskreis 16) eine Laufzeit TL auf. Die Laufzeit TL ist diejenige Zeit, die vergeht, bis ein dem vorderen Knotenpunkt 14 zugeführtes Signal eine Änderung des Istwerts x bewirkt. Der hintere Pufferspeicher 20 ist erfindungsgemäß derart ausgelegt, dass die Beziehung

$$T2 - TL = m \cdot T \tag{2}$$

gilt. m ist eine ganze Zahl. In der Regel ist die Zahl m so klein wie möglich. Oftmals weist die Zahl m den Wert 0 auf. In Einzelfällen kann die Zahl m den Wert 1 aufweisen. Größere Werte sollte die Zahl m vorzugsweise nicht aufweisen. Somit ist die Summe der Verzögerungszeiten TF, T1 von Frequenzfilter 18 und vorderem Pufferspeicher 19 ein ganzzahliges Vielfaches der Periodendauer T der Störung z abzüglich der Laufzeit TL.

Der erste Wichtungsfaktor W1 und der zweite Wichtungsfaktor W2 sind vorzugsweise von einem Benutzer der Steuereinrichtung 5 einstellbar. Gleiches gilt vorzugsweise auch für die Parameter des Frequenzfilters 18. Dadurch kann der Kompensationskreis 16 derart eingestellt werden, dass eine stabile Regelung der lageregelten Achse 3 gewähr-leistet ist. Die Wichtungsfaktoren W1, W2 sind vorzugsweise frequenzunabhängig.

Bezüglich weiterer Details der Ausgestaltung kann auf die bereits genannte EP 2 988 181 A1 verwiesen werden.

Nunmehr wird unter Bezugnahme auf FIG 3 eine mögliche alternative Anwendung des Prinzips von FIG 1 näher erläutert.

Im Rahmen von FIG 3 sind die Regelfehler e in der Speichereinrichtung 13 unter Zuordnung zu den Sollwertvektoren V hinterlegt. Der jeweilige Regelfehler e ist also spezifisch für den jeweiligen Sollwertvektor V. Er ist somit nicht nur vom Lagesollwert x* der entsprechenden lageregelten Achse 3 abhängig, sondern kann zusätzlich auch von anderen Lagesollwerten y*, z* usw. anderer lageregelter Achsen 3 abhängig sein. Es sei an dieser Stelle erinnert, dass die Sollwertvektoren V jeweils zumindest die Position des Werkzeugs 4 relativ zum Werkstück 2 bestimmen, alternativ aber zusätzlich auch die Orientierung des Werkzeugs 4 relativ zum Werkstück 2 bestimmen können.

Die Zuordnung zu den Sollwertvektoren V kann im Werkstückkoordinatensystem vorgenommen werden. Alternativ kann die Zuordnung durch eine Zuordnung zu den Koordinaten im Maschinenkoordinatensystem vorgenommen werden. Letzteres ist insbesondere dann von Vorteil, wenn ein und dieselbe Bewegungsführung des Werkzeugs 4 durch verschiedene Ansteuerungen der lageregelten Achsen 3 erreicht werden kann. Wiederum alternativ kann die Zuordnung durch eine Zuordnung zum sogenannten Bahnparameter, d.h. der zurückgelegten Strecke, erfolgen.

Die Wirkungsweise der lageregelten Achsen 3 ist - dies gilt nicht nur für die Ausgestaltung gemäß FIG 3, sondern auch für die Ausgestaltung gemäß FIG 2 - ist prinzipiell für jede lageregelte Achse 3 die gleiche. Insbesondere

wird durch jede lageregelte Achse 3 und damit auch durch die in den FIG 2 und 3 nicht näher behandelten lagegeregelten Achsen 3 die Position (also der x-, der y- und/oder der z-Wert) und/oder die Orientierung (also mindestens einer der Winkel α und β) des Werkzeugs 4 relativ zum Werkstück 2 variiert.

Im Rahmen der Ausgestaltung von FIG 3 sind die Regelfehler e in der Speichereinrichtung 13 zumindest für einen ersten Abschnitt der Folge von Sollwertvektoren V unter Zuordnung zu den entsprechenden Sollwertvektoren V hinterlegt. Im Rahmen der Ausgestaltung von FIG 3 definiert also die Folge der Sollwertvektoren V auch die Reihenfolge, in der die Regelfehler e aus der Speichereinrichtung 13 ausgelesen und dem Modell 11 zugeführt werden. Insbesondere wird der jeweils auszulesende Regelfehler e anhand desjenigen Sollwertvektors V ermittelt, dessen Lagesollwert x* gerade dem Lageregler 10 zugeführt wird.

Es ist möglich, die genannte Vorgehensweise so wie sie ist für die gesamte durch die Folge von Sollwertvektoren V definierte Bahn 9 auszuführen. In diesem Fall ist in der Speichereinrichtung 13 für jeden Sollwertvektor V der jeweilige Regelfehler e hinterlegt. In vielen Fällen erfolgt in Teilbereichen der Bahn 9 jedoch auch ohne die Berücksichtigung der Regelfehler e eine hinreichend genaue Bearbeitung des Werkstücks 2 durch das Werkzeug 4. Beispielsweise ist es entsprechend der Darstellung in FIG 5 möglich, dass entlang gerader Abschnitte der abzufahrenden Bahn 9 diese mit hinreichender Genauigkeit abgefahren werden, während in gekrümmten Bereichen größere Regelfehler e auftreten. Die Regelfehler e sind in FIG 5 deutlich übertrieben dargestellt, damit sie besser erkennbar sind. Sie liegen in der Regel bei wenigen Mikrometern. Sie sind jedoch nicht einheitlich für alle gekrümmten Bereiche, sondern von gekrümmtem Bereich zu gekrümmtem Bereich verschieden. In einem derartigen Fall - wenn also nur in manchen Abschnitten der abzufahrenden Bahn 9 nennenswerte Regelfehler e auftreten - ist es möglich, die Regelfehler e nur für diese Abschnitte in der Speichereinrichtung 13 zu hinterlegen, beispielsweise für den Abschnitt, der in FIG 5 durch die beiden gestrichelten Linien begrenzt ist. Die Anzahl an Abschnitten und auch deren Ausgestaltung kann nach Bedarf bestimmt sein. Auch die Verwertung der Regelfehler e erfolgt in diesem Fall nur in diesen Abschnitten, während also der jeweilige Abschnitt der Bahn 9 abgefahren wird. Im verbleibenden Teil der Bahn 9 werden in diesem Fall keine Regelfehler e verwertet.

Im Falle mehrerer Abschnitte sind in der Speichereinrichtung 13 im einfachsten Fall für die Sollwertvektoren V des jeweiligen Abschnitts jeweils eigene Regelfehler e hinterlegt. In manchen Fällen kann es möglich sein, dass die Regelfehler e für einen Abschnitt der Bahn 9 zugleich auch für mindestens einen weiteren Abschnitt der Bahn 9 hinterlegt sind. In diesem Fall sind die Regelfehler e also unter Zuordnung zu den Sollwertvektoren V beider Abschnitte (oder gegebenenfalls sogar noch mehr Abschnitten) in der Speichereinrichtung 13 hinterlegt. In diesem Fall ruft die Steuereinrichtung 5 ein und dieselben Regelfehler e nicht nur dann aus der Speichereinrichtung 13 ab und führt sie dem Modell 11 zu, wenn der eine Abschnitt der Bahn 9 abgefahren wird. Vielmehr ruft die Steuereinrichtung 5 diese Regelfehler e auch dann aus der Speichereinrichtung 13 ab und führt sie dem Modell 11 zu, wenn der andere Abschnitt der Bahn 9 (oder ein weiterer Abschnitt der Bahn 9, dem die Regelfehler e ebenfalls zugeordnet sind) abgefahren wird.

Beispielsweise kann es entsprechend der Darstellung in FIG 6 möglich sein, dass an verschiedenen Stellen des Werkstücks 2 ein und dieselbe Struktur 23 eingebracht werden soll, beispielsweise entsprechend der Darstellung in FIG 6 eine im wesentlichen rechteckige Tasche mit abgerundeten Ecken. Im Falle gleichartiger Strukturen 23 unterscheiden sich - zumindest im Werkstückkoordinatensystem - die Sollwertvektoren V für das Einbringen einer der Strukturen 23 von den Sollwertvektoren V für das Einbringen einer anderen der Strukturen 23 in der Regel nur durch einen konstanten translatorischen Offset. Je nach Art der Werkzeugmaschine 1 kann es in diesem Fall möglich sein, dieselben Regelfehler e bei jeder dieser Strukturen 23 zu verwerten.

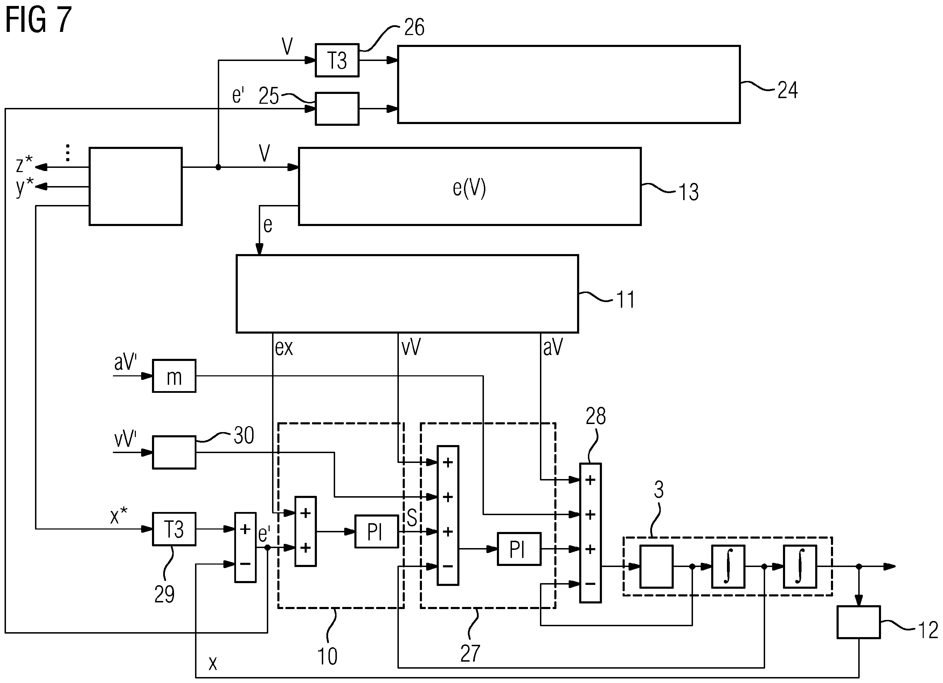

Im Falle der Ausgestaltung gemäß FIG 2 erfolgen ein erstmaliges Ermitteln und Einspeichern der Regelfehler e in die Speichereinrichtung 13 und nachfolgend ein kontinuierliches Nachführen des in der Speichereinrichtung 13 gespeicherten Regelfehlers e. Im Falle der Ausgestaltung gemäß FIG 3 ist dies nicht der Fall. Um ein derartiges Ermitteln und Nachführen des Regelfehlers e zu ermöglichen, ist jedoch möglich, die Ausgestaltung von FIG 3 entsprechend FIG 7 zu modifizieren.

FIG 7 geht aus von FIG 3. Die übereinstimmenden Sachverhalte werden daher nicht nochmals erläutert. Zusätzlich ist jedoch eine weitere Speichereinrichtung 24 vorhanden. Es wird die Regeldifferenz e' abgegriffen. Die Regeldifferenz e' wird der weiteren Speichereinrichtung 24 zugeführt. Vorzugsweise erfolgt vor dem Zuführen zur weiteren Speichereinrichtung 23 eine Filterung in einem Frequenzfilter 25. Der Frequenzfilter 25 kann analog zum Frequenzfilter 18 ausgebildet sein. Insbesondere weist der Frequenzfilter 25 vorzugsweise eine konstante Gruppenlaufzeit auf. Dies hat den Vorteil, dass durch die Filterung keine Signalverzerrungen entstehen. Weiterhin werden der weiteren Speichereinrichtung 24 auch die jeweils zugehörigen Sollwertvektoren V zugeführt. Soweit erforderlich, werden die Sollwertvektoren V zuvor in einem Verzögerungsglied 26 um eine Verzögerungszeit T3 verzögert. Die Steuereinrichtung 5 ermittelt also durch Vergleich eines jeweiligen Lageistwerts x mit dem jeweiligen Lagesollwert x* der entsprechenden lagegeregelten Achse 3 die Regeldifferenz e'. Die Regeldifferenz e' wird - gefiltert oder ungefiltert - der Speichereinrichtung 24 zugeführt und dort unter Zuordnung zum jeweiligen Sollwertvektor V hinterlegt.

Die Regeldifferenzen e' werden zunächst nur in der weiteren Speichereinrichtung 24 gespeichert. Sie wirken sich noch nicht aktiv auf die Ansteuerung der lagegeregelten Achsen 3 aus.

Es ist aber möglich, in einem nachfolgenden Schritt die in der Speichereinrichtung 13 hinterlegten Regelfehler e anhand der in der weiteren Speichereinrichtung 24 gespeicherten Regeldifferenzen e' zu modifizieren. Beispielsweise kann ein allmähliches Nachführen der Regelfehler e um einen bestimmten Prozentsatz der Differenz zwischen den Regelfehlern e und den korrespondierenden Regeldifferenzen e' erfolgen.

Das Nachführen der Regelfehler e kann kontinuierlich oder nur im Einzelfall erfolgen, beispielsweise aufgrund einer Anforderung durch einen Bediener der Werkzeugmaschine 1. Bei einer kontinuierlichen Nachführung ist es sinnvoll, die jeweils auftretenden Regeldifferenzen e'zu überwachen. Insbesondere muss sichergestellt werden, dass die Regeldifferenz e' von Iteration zu Iteration nicht größer wird. Falls dies geschehen sollte, treten Resonanzen auf, die nicht tolerierbar sind. In diesem Fall sollte entweder das Nachführen der Regelfehler e und eventuell sogar das Aufschalten der Korrekturwerte ex beendet werden oder eine Neuabstimmung beispielsweise des Frequenzfilters 25 erfolgen. Insbesondere kann eine Grenzfrequenz des Frequenzfilters 25 reduziert werden.

Es ist möglich, in der weiteren Speichereinrichtung 24 die ungefilterten Regeldifferenzen e' abzuspeichern. In diesem Fall muss jedoch ebenfalls die entsprechende Filterung erfolgen, bevor die Modifikation bzw. das Nachführen der Regelfehler e erfolgt.

Die FIG 2 und 3 zeigen nicht nur das Grundprinzip der vorliegenden Erfindung, je einmal bei einer periodischen Störung z und bei einer nicht notwendigerweise periodischen, aber reproduzierbaren Störung, sondern zusätzlich auch eine wesentliche Ausgestaltung. Diese Ausgestaltung wird nachstehend näher erläutert.

Insbesondere ist es bei der Lageregelung von Werkzeugmaschinen gängige Praxis, dass dem Lageregler 10 ein Geschwindigkeits- oder Drehzahlregler 27 unterlagert ist. Dem Geschwindigkeits- oder Drehzahlregler 27 ist oftmals wiederum ein Beschleunigungs- , Moment- oder Stromregler 28 unterlagert. In seltenen Fällen ist der Beschleunigungs- , Moment- oder Stromregler 28 dem Lageregler 10 direkt unterlagert, der Geschwindigkeits- oder Drehzahlregler 27 also nicht vorhanden. Nachfolgend wird davon ausgegangen, dass beide Regler 27, 28 vorhanden sind, dass der Regler 27 ein Geschwindigkeitsregler ist und der Regler 28 ein Beschleunigungsregler ist. Analoge Ausführungen sind jedoch auch dann gültig, wenn nur einer der Regler 27, 28 vorhanden ist, der Regler 27 ein Drehzahlregler ist und/oder der Regler 28 ein Moment- oder Stromregler ist.

Im Falle des Vorhandenseins der unterlagerten Regler 27, 28 führt der Lageregler 10 das jeweilige Stellsignal S dem ihm direkt unterlagerten Regler zu, im vorliegenden Fall also dem Geschwindigkeitsregler 27. Der Lageregler 10 wirkt also indirekt über den Geschwindigkeitsregler 27 (und gegebenenfalls auch den Beschleunigungsregler 28) auf die lagegeregelte Achse 3. Erfindungsgemäß ist es möglich, dass die Steuereinrichtung 5 mittels des Modells 11 nicht nur anhand des jeweiligen Regelfehlers e den jeweiligen Kompensationswert ex ermittelt, sondern zusätzlich auch mittels des Modells 11 ein Vorsteuersignal vV, aV, das dem jeweiligen unterlagerten Regler 27, 28 zugeführt wird. Soweit erforderlich können hierbei die Vorsteuerwerte vV, aV geeignet zeitlich verzögert werden.

Gegebenenfalls kann es erforderlich sein, im Falle der Ausgestaltung gemäß FIG 2 die Längen der Pufferspeicher 18, 19 geringfügig zu modifizieren. Dies ist detailliert in der bereits mehrfach erwähnten EP 2 988 181 A1 erläutert, siehe die dortigen Ausführungen zu deren FIG 5 in deren Absätzen 42 bis 47. Im Falle der Ausgestaltung gemäß FIG 3 kann es erforderlich sein die Zuführung des Lagesollwertes x* zum Lageregler 10 in einem Verzögerungsglied 29 zu verzögern. Falls anhand der Folge von Lagesollwerten x* auch direkt Vorsteuerwerte vV', aV' für die unterlagerten Regler 27, 28 ermittelt werden, kann es weiterhin erforderlich sein, auch den Vorsteuerwert vV' in einem Verzögerungsglied 30 zu verzögern.

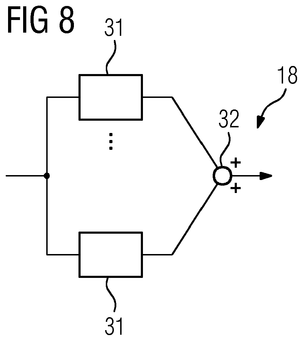

Obenstehend wurde die Ausgestaltung von FIG 2 in Verbindung mit einem Frequenzfilter 18 erläutert, das als nichtrekursives digitales Filter ausgebildet ist. Das Frequenzfilter 18 kann jedoch entsprechend der Darstellung in FIG 8 alternativ eine Anzahl von orthogonalen Korrelationsfiltern 31 aufweisen, mittels derer jeweils eine einzelne Frequenzkomponente ausgefiltert wird. Orthogonale Korrelationsfilter 31 berechnen die Koeffizienten von Fourierreihen durch orthogonale Korrelation und erzeugen dann das monofrequente und phasenrichtige Signal. Der Aufbau und die Wirkungsweise von orthogonalen Korrelationsfiltern 31 sind Fachleuten allgemein bekannt und müssen daher nicht näher erläutert werden.

Die Anzahl an orthogonalen Korrelationsfiltern 31 kann nach Bedarf bestimmt sein. Minimal ist gegebenenfalls ein einziges orthogonales Korrelationsfilter 31 vorhanden. Wenn mehrere orthogonale Korrelationsfilter 31 vorhanden sind, sind diese einander entsprechend der Darstellung in FIG 8 parallel geschaltet. Ihre Signale werden an einem Knotenpunkt 32 addiert.

Die die obenstehende Ausgestaltung des Frequenzfilters 18 kann auch bei dem Frequenzfilter 25 angewendet werden.

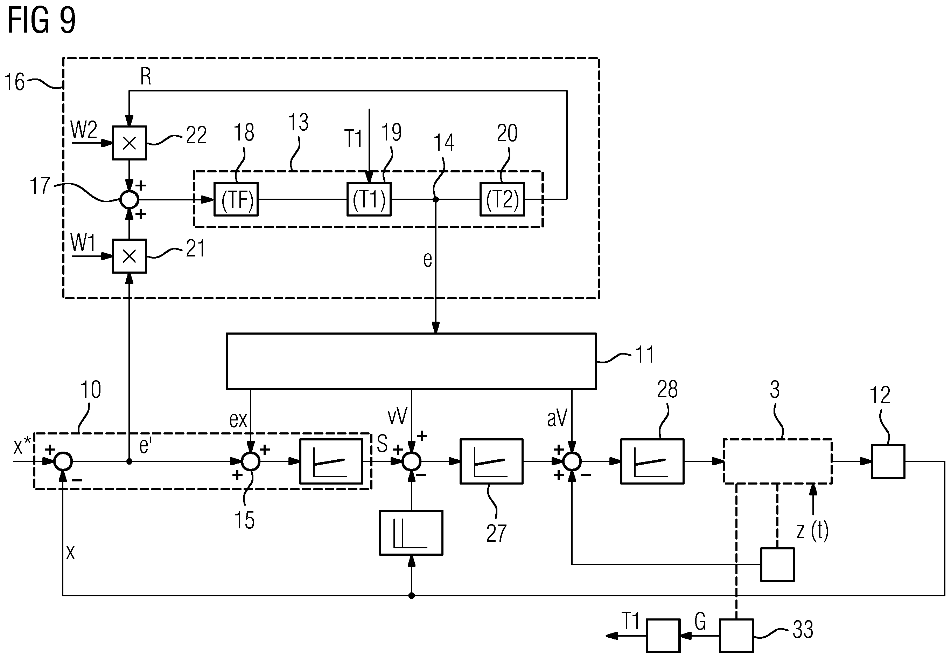

Im Falle der Ausgestaltung von FIG 2 ist es weiterhin möglich, dass die Periodendauer T stets dieselbe ist, also konstant ist. In manchen Fällen variiert die Periodendauer T jedoch im Laufe der Zeit t. Wenn die Periodendauer T im Laufe der Zeit t variiert, wird die Schaltung von FIG 2 vorzugsweise entsprechend der Ausgestaltung gemäß FIG 9 modifiziert.

Gemäß FIG 9 wird mittels einer Messeinrichtung 33 eine Größe G erfasst, welche charakteristisch für die Periodendauer T ist. Die Größe G wird einer Ermittlungseinrichtung 34 zugeführt, welche daraus die erste Verzögerungszeit T1 des vorderen Pufferspeichers 19 ermittelt und den vorderen Pufferspeicher 19 dynamisch entsprechend konfiguriert. Die erste Verzögerungszeit T1 wird somit dynamisch nachgeführt. Die Größe G als solche kann nach Bedarf bestimmt sein. Beispielsweise kann in manchen Fällen die Frequenz der Störung z proportional zu einer Drehzahl des Antriebs sein, mittels dessen die lagegeregelte Achse 3 verstellt wird. In diesem Fall ist die Periodendauer T reziprok zur Drehzahl des Antriebs. Wenn in einem derartigen Fall mittels der Messeinrichtung 33 die Drehzahl erfasst wird, kann dadurch auf die Periodendauer T rückgeschlossen werden. In vielen Fällen ist weiterhin die lagegeregelte Achse 3 selbst als Rundachse ausgebildet, also als Achse, die rotiert und deren physikalischer Zustand sich somit mit jeder vollen Umdrehung wiederholt. Wenn in derartigen Fällen die Drehzahl der Rundachse und damit die Periodendauer T variieren kann, kann die Größe G insbesondere die Drehzahl der Rundachse sein. Bezüglich weiterer Details kann wieder auf die EP 2 988 181 A1 verwiesen werden.

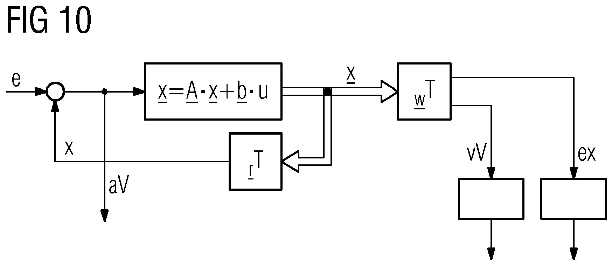

Gemäß FIG 10 ist das Modell 11 als Zustandsregler ausgebildet. Es umfasst ein Streckenmodell 35. Das Streckenmodell 35 ermittelt als Zustand eine vektorielle Größe X, wobei eine der Vektorkomponenten des Zustands X der vorgegebene Regelfehler e ist. Das Modell 11 weist weiterhin einen Zustandsregler auf. Der Zustandsregler ist in Form einer Rückführung über ein Rückführelement 36 realisiert. Mittels des Rückführelements 36 wird der mittels des Streckenmodells 35 ermittelte Zustand X auf das Modell 11 rückgekoppelt. Insbesondere wird mittels des Rückführelements 36 anhand des Zustands X ein Skalar ermittelt, der auf den vorgegebenen Regelfehler e aufaddiert wird. Zum Ermitteln des Zustands X kann das Streckenmodell 35 insbesondere algebraische Gleichungen und lineare Differenzialgleichungen umfassen. Details dieser Vorgehensweise sind insbesondere in der DE 10 2005 048 390 A1 ausführlich erläutert. Auch die Nomenklatur wurde von dort übernommen, vergleiche in der DE 10 2005 048 390 A1 die dortige Figur 2 und die zugehörigen Ausführungen in den Absätzen 33 bis 40.

Zusammengefasst betrifft die vorliegende Erfindung somit folgenden Sachverhalt:
Eine Steuereinrichtung 5 einer Werkzeugmaschine 1 implementiert einen Lageregler 10 und ein Modell 11 einer lagegeregelten Achse 3. Der Lageregler 10 nimmt jeweils einen Lagesollwert x* einer entsprechenden Folge, einen korrespondierenden Lageistwert x und einen Kompensationswert ex entgegen, ermittelt durch Addieren des jeweiligen Lagesollwertes x* und des jeweiligen Kompensationswertes ex sowie Subtrahieren des jeweiligen Lageistwertes x einen resultierenden Wert und ermittelt anhand dieses Wertes ein Stellsignal S für die lagegeregelte Achse 3. Das Stellsignal S gibt er an die lagegeregelte Achse 3 aus. Die lagegeregelte Achse 3 wird durch das Stellsignal S entsprechend dem Lagesollwert x* eingestellt, die Position x, y, z und/oder die Orientierung α, β des Werkzeugs 4 relativ zum Werkstück 2 dadurch variiert. Aus einer Speichereinrichtung 13, in der eine Folge von aufeinanderfolgenden Regelfehlern e hinterlegt ist, wird sequenziell nacheinander entsprechend der Folge jeweils einer der Regelfehler e ausgelesen und dem Modell 11 zugeführt. Das Modell 11 ermittelt unter Nachbildung des mechanisch-dynamischen Verhaltens der lagegeregelten Achse 3 anhand des jeweils ausgelesenen Regelfehlers e den jeweiligen Kompensationswert ex und führt ihn dem Lageregler 10 zu.

Die vorliegende Erfindung weist viele Vorteile auf. Insbesondere ergibt sich eine deutliche Verbesserung des dynamischen Verhaltens bei einer selbstlernenden Fehlerkorrektur.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Bearbeitungsverfahren für ein Werkstück (2) durch ein Werkzeug (4) einer Werkzeugmaschine (1),

    - wobei eine Steuereinrichtung (5) der Werkzeugmaschine (1) einen Lageregler (10) und ein Modell (11) einer lagegeregelten Achse (3) implementiert,
    - wobei der Lageregler (10) sequenziell nacheinander jeweils einen Lagesollwert (x*) einer Folge von Lagesollwerten (x*), einen ausgangsseitig der lagegeregelten Achse (3) mittels einer Messeinrichtung (12) erfassten Lageistwert (x) und einen Kompensationswert (ex) entgegennimmt,
    - wobei der Lageregler (10) durch Addieren des jeweiligen Lagesollwertes (x*) und des jeweiligen Kompensationswertes (ex) sowie Subtrahieren des jeweiligen Lageistwertes (x) einen resultierenden Wert ermittelt, anhand des resultierenden Wertes jeweils ein Stellsignal (S) für die lagegeregelte Achse (3) ermittelt und das jeweilige Stellsignal (S) an die lagegeregelte Achse (3) ausgibt,
    - wobei die lagegeregelte Achse (3) durch das Stellsignal (S) entsprechend dem Lagesollwert (x*) eingestellt wird und dadurch die Position (x, y, z) und/oder die Orientierung (α, β) des Werkzeugs (4) relativ zum Werkstück (2) variiert wird,
    - wobei zum Ermitteln des jeweiligen Kompensationswertes (ex) aus einer Speichereinrichtung (13), in der eine Folge von aufeinanderfolgenden Regelfehlern (e) hinterlegt ist, sequenziell nacheinander entsprechend der Folge jeweils einer der Regelfehler (e) ausgelesen wird und

- wobei der jeweils ausgelesene Regelfehler (e) dem Modell (11) der lagegeregelten Achse (3) zugeführt wird, welches unter Nachbildung des mechanisch-dynamischen Verhaltens der lagegeregelten Achse (3) anhand des jeweils ausgelesenen Regelfehlers (e) den jeweiligen Kompensationswert (ex) ermittelt und den ermittelten Kompensationswert (ex) dem Lageregler (10) zuführt.

2. Bearbeitungsverfahren nach Anspruch 1,
**dadurch gekennzeichnet,**

- **dass** der erfasste Lageistwert (x) mit einer eine Periodendauer (T) aufweisenden Störung (z) beaufschlagt ist,
- **dass** einem vorderen Knotenpunkt (14) des Lagereglers (10) der jeweilige Lagesollwert (x*) und der jeweilige Lageistwert (x) zugeführt werden und der vordere Knotenpunkt (14) durch Differenzbildung von Lagesollwert (x*) und Lageistwert (x) eine jeweilige Regeldifferenz (e') ermittelt,
- **dass** einem hinteren Knotenpunkt (15) des Lagereglers (10) die jeweilige Regeldifferenz (e') und der jeweilige Kompensationswert (ex) zugeführt werden und der hintere Knotenpunkt (15) durch Addition von Regeldifferenz (e') und Kompensationswert (ex) den jeweiligen resultierenden Wert ermittelt,
- **dass** zwischen dem vorderen und dem hinteren Knotenpunkt (14, 15) die Regeldifferenz (e') abgegriffen und einem Kompensationskreis (16) zugeführt wird, der einen inneren Knotenpunkt (17), ein Frequenzfilter (18) sowie einen vorderen und einen hinteren Pufferspeicher (19, 20) aufweist,
- **dass** dem inneren Knotenpunkt (17) mit einem ersten Wichtungsfaktor (W1) gewichtet die Regeldifferenz (e') und mit einem zweiten Wichtungsfaktor (W2) gewichtet ein Rückkopplungssignal (R) zugeführt werden,
- **dass** der innere Knotenpunkt (17) ein durch Addieren von gewichteter Regeldifferenz (e') und gewichtetem Rückkopplungssignal (R) gebildetes inneres Summensignal dem Frequenzfilter (18) zuführt,
- **dass** das Frequenzfilter (18) eine Frequenzfilterung durchführt und das gefilterte Signal dem vorderen Pufferspeicher (19) zuführt,
- **dass** der vordere Pufferspeicher (19) eine erste Laufzeitverzögerung durchführt und das entsprechend verzögerte Signal dem hinteren Pufferspeicher (20) zuführt,
- **dass** der hintere Pufferspeicher (20) eine zweite Laufzeitverzögerung durchführt und das entsprechend verzögerte Signal als Rückkopplungssignal (R) ausgibt,
- **dass** der Frequenzfilter (18), der vordere Pufferspeicher (19) und der hintere Pufferspeicher (20) zusammen die Speichereinrichtung (13) bilden,
- **dass** zwischen dem vorderen Pufferspeicher (19) und dem hinteren Pufferspeicher (20) der jeweilige Regelfehler (e) ausgelesen und dem Modell (11) zugeführt wird und
- **dass** das Frequenzfilter (18) und die beiden Pufferspeicher (19, 20) derart ausgelegt sind, dass die Summe der Verzögerungszeiten (TF, T1, T2) von Frequenzfilter (18) und beiden Pufferspeichern (19, 20) ein ganzzahliges Vielfaches der Periodendauer (T) der Störung (z) ist und die Summe der Verzögerungszeiten (TF, T1) von Frequenzfilter (18) und vorderem Pufferspeicher (19) ein ganzzahliges Vielfaches der Periodendauer (T) der Störung (z) abzüglich der Laufzeit (TL), die vergeht, bis ein dem vorderen Knotenpunkt (14) zugeführtes Signal eine Änderung des Lageistwertes (x) bewirkt, ist.

3. Bearbeitungsverfahren nach Anspruch 2,
**dadurch gekennzeichnet,**
**dass** das Frequenzfilter (18) eine lineare nichtrekursive digitale Filterung durchführt, insbesondere eine Tiefpassfilterung, oder eine Anzahl von orthogonalen Korrelationsfilterungen durchführt, mittels derer jeweils eine einzelne Frequenzkomponente ausgefiltert wird.

4. Bearbeitungsverfahren nach Anspruch 2 oder 3,
**dadurch gekennzeichnet,**
**dass** die Periodendauer (T) der Störung (z) variiert und dass die Verzögerungszeit (T1) des vorderen Pufferspeichers (19) entsprechend der Periodendauer (T) dynamisch nachgeführt wird.

5. Bearbeitungsverfahren nach Anspruch 1,
**dadurch gekennzeichnet,**

- **dass** der Steuereinrichtung (5) eine Folge von Sollwertvektoren (V) vorgegeben wird,
- **dass** die Sollwertvektoren (V) für die lagegeregelte Achse (3) und eine Mehrzahl von weiteren lagegeregelten Achsen (3) der Werkzeugmaschine (1) jeweils einen Lagesollwert (x*, y* usw.) umfassen,
- **dass** die Position (x, y, z) und/oder die Orientierung ($\alpha$, $\beta$) des Werkzeugs (4) relativ zum Werkstück (2) auch durch die weiteren lagegeregelten Achsen (3) variiert wird,

- **dass** die Regelfehler (e) in der Speichereinrichtung (13) zumindest für einen ersten Abschnitt der Folge von Sollwertvektoren (V) unter Zuordnung zu den Sollwertvektoren (V) des entsprechenden Abschnitts hinterlegt sind und
- **dass** die Steuereinrichtung (5) den jeweils aus der Speichereinrichtung (13) auszulesenden Regelfehler (e) anhand desjenigen Sollwertvektors (V) ermittelt, dessen Lagesollwert (x*) dem Lageregler (10) zugeführt wird.

6. Bearbeitungsverfahren nach Anspruch 5,
   **dadurch gekennzeichnet,**
   **dass** die Sollwertvektoren (V) jeweils ausschließlich die Position (x, y, z) des Werkzeugs (4) relativ zum Werkstück (2) bestimmen oder jeweils die Position (x, y, z) und die Orientierung ($\alpha$, $\beta$) des Werkzeugs (4) relativ zum Werkstück (2) bestimmen.

7. Bearbeitungsverfahren nach Anspruch 5 oder 6,
   **dadurch gekennzeichnet,**
   **dass** der Regelfehler (e) für den ersten Abschnitt der Folge von Sollwertvektoren (V) in der Speichereinrichtung (13) auch für mindestens einen zweiten Abschnitt der Folge von Sollwertvektoren (V) unter Zuordnung auch zu den Sollwertvektoren (V) des zweiten Abschnitts hinterlegt sind.

8. Bearbeitungsverfahren nach Anspruch 5, 6 oder 7,
   **dadurch gekennzeichnet,**
   **dass** die Steuereinrichtung (5) durch Vergleich des jeweiligen Lageistwerts (x) mit dem jeweiligen Lagesollwert (x*) eine Regeldifferenz (e') ermittelt und den in der Speichereinrichtung (13) hinterlegten korrespondierenden Regelfehler (e) anhand der Regeldifferenz (e') modifiziert.

9. Bearbeitungsverfahren nach einem der obigen Ansprüche,
   **dadurch gekennzeichnet,**
   **dass** der Lageregler (10) das jeweilige Stellsignal (S) einem dem Lageregler (10) unterlagerten Regler (27, 28) zuführt und dass mittels des Modells (11) anhand des Regelfehlers (e) zusätzlich zum Kompensationswert (ex) ein Vorsteuersignal (vV, aV) ermittelt wird, das dem unterlagerten Regler (27, 28) zugeführt wird.

10. Bearbeitungsverfahren nach einem der obigen Ansprüche,
    **dadurch gekennzeichnet,**
    **dass** das Modell (11) einen Zustand (X) der lagegeregelten Achse (3) ermittelt und der Zustand (X) auf das Modell (11) rückgekoppelt wird und/oder dass das Modell (11) die lagegeregelte Achse (3) mittels linearer Differenzialgleichungen modelliert.

11. Bearbeitungsverfahren nach einem der obigen Ansprüche,
    **dadurch gekennzeichnet,**
    **dass** das Modell (11) als lineares Modell ausgebildet ist.

12. Steuerprogramm für eine Steuereinrichtung (5) einer Werkzeugmaschine (1), wobei das Steuerprogramm Maschinencode (7) umfasst, der von der Steuereinrichtung (5) abarbeitbar ist, wobei die Abarbeitung des Maschinencodes (7) durch die Steuereinrichtung (5) bewirkt, dass die Steuereinrichtung (5) die Werkzeugmaschine (1) gemäß einem Bearbeitungsverfahren nach einem der obigen Ansprüche betreibt.

13. Steuereinrichtung für eine Werkzeugmaschine (1), die mit einem Steuerprogramm (6) nach Anspruch 12 programmiert ist, so dass sie im Betrieb die Werkzeugmaschine (1) gemäß einem Bearbeitungsverfahren nach einem der Ansprüche 1 bis 11 betreibt.

14. Werkzeugmaschine zum Bearbeiten eines Werkstücks (2) durch ein Werkzeug (4) der Werkzeugmaschine,

    - wobei die Werkzeugmaschine eine Mehrzahl von lagegeregelten Achsen (3) aufweist, mittels derer das Werkzeug (4) relativ zu dem Werkstück (2) verfahrbar ist,
    - wobei die Werkzeugmaschine eine Steuereinrichtung (5) nach Anspruch 13 aufweist, über welche die Achsen (3) der Werkzeugmaschine lagegeregelt werden.

**Claims**

1. Machining method for a workpiece (2) by means of a tool (4) of a machine tool (1),

   - wherein a control device (5) of the machine tool (1) implements a position controller (10) and a model (11) of a position-controlled axis (3),
   - wherein the position controller (10) in each case receives a position setpoint value (x*) of a sequence of position setpoint values (x*), a position actual value (x) detected on the output side of the position-controlled axis (3) by means of a measuring device (12) and a compensation value (ex) sequentially one after the other,
   - wherein by adding the respective position setpoint value (x*) and the respective compensation value (ex) and subtracting the respective actual position value (x), the position controller (10) determines a resulting value, based on the resulting value determines an actuating signal (S) for the position-controlled axis (3) in each case and outputs the respective actuating signal (S) to the position-controlled axis (3),
   - wherein the position-controlled axis (3) is set by the actuating signal (S) according to the position setpoint value (x*) and thereby the position (x, y, z) and/or the orientation ($\alpha$, $\beta$) of the tool (4) relative to the workpiece (2) is varied,
   - wherein in order to determine the respective compensation value (ex) from a storage device (13) in which a sequence of successive control errors (e) is stored, one of the control errors (e) is read sequentially one after the other according to the sequence and
   - wherein the respectively read-out control error (e) is supplied to the model (11) of the position-controlled axis (3) which determines the respective compensation value (ex) by simulating the mechanical dynamic behavior of the position-controlled axis (3) on the basis of the respectively read-out control error (e) and supplies the determined compensation value (ex) to the position controller (10).

2. Machining method according to claim 1,
   **characterised in that**

   - the detected actual position value (x) is impinged on by an interference (z) having a duration (T),
   - the respective position setpoint value (x*) and the respective actual position value (x) are supplied to a front node point (14) of the position controller (10) and the front node point (14) determines a respective control difference (e') by subtracting the position setpoint value (x*) and the actual position value (x),
   - the respective control difference (e') and the respective compensation value (ex) are supplied to a rear node point (15) of the position controller (10) and the rear node point (15) determines the respective resulting value by adding the control difference (e') and the compensation value (ex),
   - the control difference (e') is tapped between the front and the rear node point (14, 15) and supplied to a compensation circuit (16) having an inner node point (17), a frequency filter (18) and a front and a rear data buffer (19, 20),
   - the control difference (e') weighted with a first weighting factor (W1) and a feedback signal (R) weighted with a second weighting factor (W2) are supplied to the inner node point (17),
   - the inner node point (17) supplies an inner sum signal formed by adding the weighted control difference (e') and the weighted feedback signal (R) to the frequency filter (18),
   - the frequency filter (18) performs frequency filtering and supplies the filtered signal to the front data buffer (19),
   - the front data buffer (19) performs a first interconnection time delay and supplies the correspondingly delayed signal to the rear data buffer (20),
   - the rear data buffer (20) performs a second interconnection time delay and outputs the correspondingly delayed signal as a feedback signal (R),
   - the frequency filter (18), the front data buffer (19) and the rear data buffer (20) together form the storage device (13),
   - the respective control error (e) is read out between the front data buffer (19) and the rear data buffer (20) and supplied to the model (11) and
   - the frequency filter (18) and the two data buffers (19, 20) are designed such that the sum of the delay times (TF, T1, T2) of the frequency filter (18) and both the data buffers (19, 20) is an integer multiple of the duration (T) of the interference (z) and the total of the delay times (TF, T1) of the frequency filter (18) and the front data buffer (19) is an integer multiple of the duration (T) of the interference (z) minus the runtime (TL) which elapses until a signal supplied to the front node point (14) brings about a change in the actual position value (x).

3. Machining method according to claim 2,
   **characterised in that**

the frequency filter (18) performs linear non-recursive digital filtering, in particular low-pass filtering, or performs a quantity of orthogonal correlation filtering by means of which in each case a single frequency component is filtered out.

4. Machining method according to claim 2 or 3,
   **characterised in that**
   the duration (T) of the interference (z) varies and that the delay time (T1) of the front data buffer (19) is tracked dynamically according to the duration (T).

5. Machining method according to claim 1,
   **characterised in that**

   - a sequence of setpoint value vectors (V) is provided for the control device (5),
   - the setpoint value vectors (V) for the position-controlled axis (3) and a plurality of further position-controlled axes (3) of the machine tool (1) each comprise a position setpoint value (x*, y*, etc.),
   - the position (x, y, z) and/or the orientation ($\alpha$, $\beta$) of the tool (4) relative to the workpiece (2) is also varied by the further position-controlled axes (3),
   - the control errors (e) are stored in the storage device (13) at least for a first section of the sequence of setpoint vectors (V) with assignment to the setpoint vectors (V) of the corresponding section and
   - the control device (5) determines the control error (e) to be read out of the storage device (13) on the basis of the setpoint value vector (V) whose position setpoint value (x*) is supplied to the position controller (10).

6. Machining method according to claim 5,
   **characterised in that**
   the setpoint value vectors (V) in each case only determine the position (x, y, z) of the tool (4) relative to the workpiece (2) or respectively the position (x, y, z) and the orientation ($\alpha$, $\beta$) of the tool (4) relative to the workpiece (2).

7. Machining method according to claim 5 or 6,
   **characterised in that**
   the control error (e) for the first section of the sequence of setpoint value vectors (V) in the storage device (13) is also stored for at least a second section of the sequence of setpoint value vectors (V), also being assigned to the setpoint value vectors (V) of the second section.

8. Machining method according to claim 5, 6 or 7,
   **characterised in that**
   the control device (5) determines a control difference (e') by comparing the respective actual position value (x) with the respective position setpoint value (x*) and modifies the corresponding control error(s) stored in the storage device (13) based on the control difference (e').

9. Machining method according to one of the above claims,
   **characterised in that**
   the position controller (10) supplies the respective control signal (S) to a controller (27, 28) subordinate to the position controller (10) and that by means of the model (11) a pilot signal (vV, aV) is determined in addition to the compensation value (ex) on the basis of the control error (e), which is supplied to the subordinate controller (27, 28).

10. Machining method according to one of the above claims,
    **characterised in that**
    the model (11) determines a status (X) of the position-controlled axis (3) and the status (X) is fed back to the model (11) and/or the model (11) models the position-controlled axis (3) by means of linear differential equations.

11. Machining method according to one of the above claims,
    **characterised in that**
    the model (11) is designed as a linear model.

12. Control program for a control device (5) of a machine tool (1), wherein the control program comprises machine code (7) which can be processed by the control device (5), wherein the processing of the machine code (7) by the control device (5) triggers the control device (5) to operate the machine tool (1) according to a machining method according to one of the above claims.

**13.** Control device for a machine tool (1) which is programmed with a control program (6) according to claim 12 such that during operation it operates the machine tool (1) according to a machining method according to one of claims 1 to 11.

**14.** Machine tool for machining a workpiece (2) by means of a tool (4) of the machine tool,

- wherein the machine tool has a plurality of position-controlled axes (3) by means of which the tool (4) can be moved relative to the workpiece (2),
- wherein the machine tool has a control device (5) according to claim 13 by way of which the axes (3) of the machine tool are position-controlled.

**Revendications**

**1.** Procédé d'usinage d'une pièce (2) par un outil (4) d'une machine-outil (1),

- dans lequel un dispositif (5) de commande de la machine-outil (1) met en œuvre un régleur (1) de position et un modèle (11) d'un axe (3) réglé en position,
- dans lequel le régleur (10) de position reçoit en séquence l'une après l'autre, respectivement une valeur (x*) de consigne de position d'une suite de valeurs (x*) de consigne de position, une valeur (x) de position, relevée au moyen d'un dispositif (12) de mesure du côté de la sortie de l'axe (3) réglé en position et une valeur (ex) de compensation,
- dans lequel le régleur (10) de position détermine, par addition de la valeur (x*) de consigne de position respective et de la valeur (ex) de compensation respective, ainsi que par soustraction de la valeur (x) réelle de position respective, une valeur résultante, détermine à l'aide de la valeur résultant, respectivement un signal (S) de réglage de l'axe (3) réglé en position et donne le signal (S) de réglage respectif à l'axe (3) réglé en position,
- dans lequel on règle l'axe (3) réglé en position par le signal (S) de réglage, conformément à la valeur (x*) de consigne de position, et on fait ainsi varier la position (x, y, z) et/ou l'orientation ($\alpha$, $\beta$) de l'outil (4) par rapport à la pièce (2),
- dans lequel, pour déterminer la valeur (ex) de compensation respective, on lit séquentiellement en succession, conformément à la suite, respectivement, l'un des défauts (e) de réglage dans un dispositif (13) de mise en mémoire, dans lequel est mise en mémoire une suite de défauts (e) de réglage successifs et
- dans lequel on envoie le défaut (e) de réglage lu, respectivement, au modèle (11) de l'axe (3) réglé en position, lequel, en reproduisant le comportement mécano-dynamique de l'axe (3) réglé en position, détermine la valeur (ex) de compensation respective à l'aide de l'erreur (e) de réglage respective, qui est lue, et envoie la valeur (ex) de compensation déterminée au régleur (10) de position.

**2.** Procédé d'usinage suivant la revendication 1,
**caractérisé en ce que**

- la valeur (x) réelle de position relevée est soumise à une perturbation (z) ayant une période (T),
- **en ce que** l'on envoie à un point (14) nodal avant du régleur (10) de position la valeur (x*) respective de consigne de position et la valeur (x) respective réelle de position et le point (14) nodal avant détermine une différence (e') respective de réglage en formant la différence entre la valeur (x*) de consigne de position et la valeur (x) réelle de position,
- **en ce que** l'on envoie à un point (15) nodal arrière du régleur (10) de position la différence (e') respective de réglage et la valeur (ex) respective de compensation et le point (15) nodal arrière détermine la valeur respective résultante en additionnant la différence (e') de réglage et la valeur (ex) de compensation,
- **en ce que** l'on prélève la différence (e') de réglage entre' le point (14) nodal avant et le point (15) nodal arrière et on l'envoie à un circuit (16) de compensation, qui a un point (17) nodal intérieur, un filtre (18) de fréquence, ainsi qu'une mémoire (19, 20) tampon avant et arrière,
- **en ce que** l'on envoie au point (17) nodal intérieur, pondéré par un premier facteur (W1) de pondération, la différence (e') de réglage et, pondéré par un deuxième facteur (W2) de pondération, un signal (R) de réaction,
- **en ce que** le point (17) nodal intérieur envoie au filtre (18) de fréquence, un signal somme intérieur formé par addition de la différence (e') de réglage pondéré et du signal (R) de réaction pondéré,
- **en ce que** le filtre (18) de fréquence effectue un filtrage de fréquence et envoie le signal filtré à la mémoire (19) tampon avant,
- **en ce que** la mémoire (19) tampon avant effectue une première temporisation du temps de parcours et envoie le signal temporisé correspondant à la mémoire (20) tampon arrière,

- **en ce que** la mémoire (20) tampon arrière effectue une deuxième temporisation du temps de parcours et émet le signal temporisé correspondant comme signal (R) de réaction,
- **en ce que** le filtre (18) de fréquence, la mémoire (19) tampon avant et la mémoire (20) tampon arrière forment ensemble le dispositif (13) de mise en mémoire,
- **en ce que** on lit le défaut (e) de réglage respectif entre la mémoire (19) tampon avant et la mémoire (20) tampon arrière et on l'envoie au modèle (11) et
- **en ce que** le filtre (18) de fréquence et les deux mémoires (19, 20) tampon sont conçus de manière à ce que la somme des temps (TF, T1, T2) de temporisation du filtre (18) de fréquence et des deux mémoires (19, 20) tampon soit un multiple en nombre entier de la période (T) de la perturbation (z) et de manière à ce que la somme des temps (TF, T1) de temporisation du filtre (18) de fréquence et de la mémoire (19) tampon avant soit un multiple en nombre entier de la période (T) de la perturbation (z), déduction faite du temps (TL) de parcours, qui s'écoule jusqu'à ce qu'un signal, envoyé au point (14) nodal avant, provoque ne variation de la valeur (x) réelle de position.

3.   Procédé d'usinage suivant la revendication 2,
     **caractérisé**
     **en ce que** le filtre (18) de fréquence effectue un filtrage numérique linéaire non récursif, notamment un filtrage passe-bas où un certain nombre de filtrages de corrélation orthogonaux, au moyen duquel on filtre, respectivement, une composante individuelle de fréquence.

4.   Procédé d'usinage suivant la revendication 2 ou 3,
     **caractérisé**
     **en ce que** la période (T) de la perturbation (z) varie et **en ce que** l'on suit dynamiquement, conformément à la période (T), le temps (T1) de temporisation de la mémoire (19) tampon avant.

5.   Procédé d'usinage suivant la revendication 1,
     **caractérisé**
     **en ce que** l'on prescrit au dispositif (5) de commande une suite de vecteurs (V) de valeur de consigne,

     - **en ce que** le vecteurs (V) de valeur de consigne comprennent, pour l'axe (3) réglé en position et pour une pluralité d'autres axes (3) réglés en position de la machine-outil (1), respectivement, une valeur (x*, y*, etc.) de consigne de position,
     - **en ce que** l'on fait varier la position (x, y, z) et/ou l'orientation ($\alpha$, $\beta$) de l'outil (4) par rapport à la pièce (2) également par les autres axes (3) réglés en position,
     - **en ce que** les défauts (e) de réglage sont mis en mémoire dans le dispositif (13) de mise en mémoire au moins pour une partie de la suite de vecteurs (V) de valeur de consigne avec l'association aux vecteurs (V) de valeur de consigne de la partie correspondante et
     - **en ce que** le dispositif (5) de commande détermine le défaut (e) de réglage à lire, respectivement, dans le dispositif (13) de mise en mémoire à l'aide du vecteur (V) de valeur de consigne, dont la valeur (x*) de consigne de position est envoyée au régleur (10) de position.

6.   Procédé d'usinage suivant la revendication 5,
     **caractérisé**
     **en ce que** les vecteurs (V) de valeur de consigne déterminent, respectivement, exclusivement la position (x, y, z) de l'outil (4) par rapport à la pièce (2) ou, respectivement, la position (x, y z) et l'orientation ($\alpha$, $\beta$) de l'outil (4) par rapport à la pièce (2).

7.   Procédé d'usinage suivant la revendication 5 ou 6,
     **caractérisé**
     **en ce que** le défaut (e) de réglage pour la première partie de la suite de vecteurs (V) de valeur de consigne est mis en mémoire dans le dispositif (13) de mise en mémoire, également pour au moins une deuxième partie de la suite de vecteurs (V) de valeur de consigne avec également association aux vecteurs (V) de valeur de consigne de la deuxième partie.

8.   Procédé d'usinage suivant la revendication 5, 6 ou 7,
     **caractérisé**
     **en ce que** le dispositif (5) de commande détermine une différence (e') de réglage en comparant la valeur (x) respective réelle de position à la valeur (x*) respective de consigne de position et modifie, à l'aide de la différence (e') de réglage, le défaut (e) de réglage correspondant mis dans le dispositif (13) de mise en mémoire.

9. Procédé d'usinage suivant l'une des revendications précédentes,
   **caractérisé**
   **en ce que** le régleur (10 ) de position envoie le signal (S) respectif de réglage à un régleur (27, 28) subordonné au régleur (10) de position et **en ce que**, au moyen du modèle (11), à l'aide du défaut (e) de réglage, on détermine, supplémentairement à la valeur (ex) de compensation, un signal (vV, aV) de pilotage, que l'on envoie au régleur (27, 28) subordonné.

10. Procédé d'usinage suivant l'une des revendications précédentes,
    **caractérisé**
    **en ce que** le modèle (11) détermine un état (X) de l'axe (3) réglé en position et l'état (X) est renvoyé au modèle (11) et/ou **en ce que** le modèle (11) modélise l'axe (3) réglé en position au moyen d'équations différentielles linéaires.

11. Procédé d'usinage suivant l'une des revendications précédentes,
    **caractérisé**
    **en ce que** le modèle (11) est constitué sous la forme d'un modèle linéaire.

12. Programme de commande d'un dispositif (5) de commande d'une machine-outil (1), le programme de commande comprenant des codes (7) de machine, qui peuvent être élaborés par le dispositif (5) de commande, l'élaboration du code (7) de machine par le dispositif (5) de commande faisant que le dispositif (5) de commande fait fonctionner la machine-outil (1) selon un procédé d'usinage suivant l'une des revendications précédentes.

13. Dispositif de commande d'une machine-outil (1), qui est programmé par un programme (6) de commande suivant la revendication 12, de manière à ce qu'il fonctionne lorsque la machine-outil (1) est en fonctionnement suivant un procédé d'usinage suivant l'une des revendications 1 à 11.

14. Machine-outil d'usinage d'une pièce (2) par un outil (4) de la machine-outil,

    - dans laquelle la machine-outil a une pluralité d'axes (3) réglés en position au moyen duquel l'outil (4) peut être déplacé par rapport à la pièce (2),
    - dans laquelle la machine-outil a un dispositif (5) de commande suivant la revendication 13, par lequel les axes (3) de la machine-outil sont réglés en position.

FIG 1

FIG 2

FIG 3

EP 3 438 773 B1

FIG 4

FIG 5

FIG 6

FIG 7

FIG 8

# FIG 9

EP 3 438 773 B1

FIG 10

$$\underline{x} = \underline{A} \cdot \underline{x} + \underline{b} \cdot u$$

$$\underline{w}^T$$

$$\underline{r}^T$$

e

x

aV

$$\underline{x}$$

vV

ex

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2988181 A1

- DE 102005048390 A1